# EUROPEAN PATENT APPLICATION

(11) **EP 1 675 420 A1**
(43) Date of publication of application: **28.06.2006**
(21) Application number: 04293074.3
(22) Date of filing: 21.12.2004
(51) Int. Cl.: H04Q 7/34, H04Q 7/38

(54) **Method and system for analysing network connections**

(71) Applicant: Orange S.A., 75505 Paris Cédex 15 (FR)
(72) Inventor: Balon, Marc, 1495 Villers-La-Ville (BE); Gillot, David, 1160 Brussels (BE); Verzele, François, 7700 Mouscron (BE); Goffin, Eddy, 7181 Seneffe (BE)
(74) Representative: DeVile, Jonathan Mark

(57) **Abstract**

A method of analysing network connections used to communicate incoming calls from a first network to a second mobile network. The method comprises detecting routing request data communicated from the first network to the second mobile network. The routing request data provides a request for a temporary identification number required for establishing an incoming call between a calling terminal and a called terminal affiliated with the second mobile network. The temporary identification number is allocated to the called terminal to temporarily identify the called terminal within the second mobile network. The method also comprises identifying, from the routing request data, the first network and detecting the temporary identification number communicated from the second mobile network to the first network in response to the routing request data. The method also comprises detecting an incoming call communicated from the calling terminal via the first network to the second mobile network over a network connection between the first network and the second mobile network, to the called terminal. The method identifies the network connection used to communicate the incoming call from the first network to the second mobile network by correlating the temporary identification number received with the incoming call with the temporary identification number detected in response to the routing request data.

By identifying and correlating the identified first networks with the identified network connections with respect to the correlated temporary identification numbers, it is possible to identify which network connections are used by a particular first network in communicating calls to the second mobile network.

## Description

### Field of the Invention

The present invention relates to methods and systems for analysing network connections used to communicate incoming calls from a first network to a second mobile radio network.

### Background of the Invention

Mobile radio networks provide a facility for subscribers to communicate via a radio access interface, which conveys radio signals representing data between mobile subscribers and base stations of the mobile radio network. A mobile radio network may be linked to other communications networks through which in coming and out going calls may be established. The calls are established between the mobile networks and the other networks via network interconnections which may be operated by a third party or by the operator of one or more of the other networks. A proportion of the network interconnections, which are used to establish calls with the mobile radio network, may be negotiated with operators of the other communications networks. However, the operator of the mobile radio network may not be aware of or in control of the network interconnections which are actually used to establish the calls. Having negotiated an agreement with respect to the network interconnections, it is difficult for the operator of the mobile radio network to confirm whether the agreement is being fulfilled and the expected quality level reached.

### Summary of Invention

According to one aspect of the present invention there is provided method of analysing network connections used to communicate incoming calls from a first network to a second mobile network. The method comprises detecting routing request data communicated from the first network to the second mobile network. The routing request data provides a request for a temporary identification number required for establishing an incoming call between a calling terminal communicating via the first network and a called terminal affiliated with the second mobile network. The temporary identification number is allocated to the called terminal to temporarily identify the called terminal within the second mobile network. The method also comprises identifying, from the routing request data, the first network via which the calling terminal is communicating and detecting the temporary identification number communicated from the second mobile network to the first network in response to the routing request data. The method also comprises detecting an incoming call communicated from the calling terminal via the first network to the second mobile network over a network connection between the first network and the second mobile network, to the called terminal. The method comprises identifying a temporary identification number received with the incoming call and correlating the temporary identification number received with the incoming call with the temporary identification number provided in response to the routing request data. The correlation thereby identifies that the in coming call was established in response to the routing request data, the method including associating the first network with the in coming call, and identifying the network connection used to communicate the incoming call from the first network to the second mobile network.

By detecting and correlating the temporary identification numbers communicated from the second mobile network to the first network in response to routing request data and communicated from the first network to the second mobile network in association with incoming calls, information regarding the outcome of an incoming call to which a temporary identification number was allocated may be obtained. For instance, if no correlation of a particular temporary identification number is possible because an incoming call having the particular temporary identification number is not detected, then this may be indicative of a dropped call, or that the incoming call was undesirably routed using a mechanism that restricts the use of the temporary identification number to connect a call.

By identifying and correlating the identified first networks with the identified network connections with respect to the correlated temporary identification numbers, it is possible to identify which network connections are used by a particular first network in communicating calls to the second mobile network. This relationship can be used to determine whether quota agreements are being met by the first network or intermediate carriers, or whether the network connections used by a particular first network are of a suitable quality. Additionally, the dropped calls referred to above can be attributed to a particular first network, enabling further investigation of the nature of the dropped calls. The relationship also enables the assessment of the presence of other call features such as the Calling Line Indicator (CLI).

In one example embodiment, the called terminal is a subscriber to an operator of the first network and roaming within the second mobile network, the routing request data and the temporary identification number being generated as part of a Mobile Application Part signalling protocol. For this example, the temporary identification number is a Mobile Station Roaming Number, and the routing request data corresponds to the Send Routing Information (SRI) MAP message. According to this example, incoming calls to a mobile network can be analysed to determine the identity of the network from which the in coming calls are received and the interconnection from that network. The called terminal to which the in coming call is directed may be an in bound roaming mobile subscriber, which has roamed from its home network and is currently affiliated with the second mobile network. The home network of the roaming mobile subscriber terminal may be the network via which the in coming call is routed.

In another example embodiment, the calling terminal is a mobile terminal subscriber of an operator of the second mobile network being analysed and roaming within the first network. For this example the calling terminal initiates a call within the first network and in accordance with the example, the routing request data is communicated back to the second mobile network, which is the calling terminal's home network. The calling terminal is therefore an outbound roaming mobile subscriber. According to this example, the routing request data and the temporary identification number are generated as part of a Customised Application of Mobile Enhanced Logic (CAMEL) Application Part signalling protocol, the temporary identification number being a Temporary Service Access Number, and the routing request data corresponding to a CAMEL Application Part (CAP) Initial Detection Point (IDP). Using this embodiment, incoming calls to the second mobile network can be monitored whenever a subscriber of the second mobile network places a call to a mobile user currently affiliated to the second mobile network.

In some embodiments, a number of calls in which no incoming call is detected corresponding to a detected temporary identification number within a predetermined time period from the detection of the temporary identification number. The number of such calls provides an indication that there is a potential routing problem between the associated first network and the second mobile network. Once identified, the potential routing problem can be investigated.

The method can also be used to determine whether the relative distribution of calls communicated from the first network or other networks and the second mobile network using the identified network connections satisfies predetermined criteria, such as pre-agreed usage quotas for each of the network connections.

Similarly, the method can be used to identify, for a particular first network, network connections providing unsatisfactory quality in respect of some or all incoming calls from the first network. For instance, network connections in which Caller Line Identification (CLI) signalling is either not being used, or is being corrupted.

It is possible to determine how incoming calls to a second network are conveyed from a first network. The method enables the extraction of specific calls from the incoming traffic flow from the first network to the second network. The identification of the extracted incoming calls enables the monitoring of the calls which facilitates the determination of the routing decision from the first network to the second network. It also provides quality information related to the identified incoming call.

Various further aspects and features of the present inventions are defined in the appended claims. Other aspects of the invention include a system, an analysing data processor and a computer program.

### Brief Description of the Drawings

Embodiments of the present invention will now be described by way of example only with reference to the accompanying drawings where like parts are provided with corresponding reference numerals and in which:
Figure 1 is a schematic block diagram of a mobile radio network according to the Global System for Mobiles (GSM) standard adapted to include parts for monitoring network connections between a mobile network and other networks;
Figure 2 is a schematic illustration of a system for monitoring inter-network calls in accordance with an embodiment of the invention using a Mobile Application Part (MAP) signalling protocol;
Figure 3 schematically illustrates a method of monitoring inter-network calls in accordance with an embodiment of the invention;
Figure 4 is a schematic illustration of a system for monitoring inter-network calls in accordance with an embodiment of the invention using a Customised Application of Mobile Enhanced Logic Application Part signalling protocol;
Figure 5 schematically illustrates an example set of results which could be generated by the monitoring systems and methods of Figures 2 to 4.

### Description of the Example Embodiments

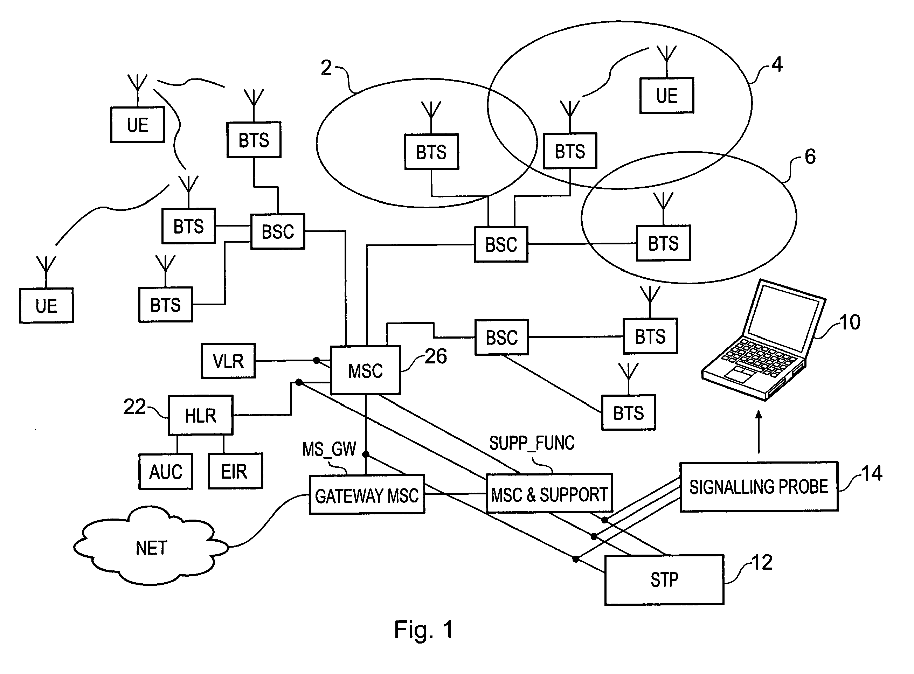

Figure 1 provides an example schematic block diagram of a mobile radio network according to the Global System for Mobiles (GSM) standard. In Figure 1 a mobile switching centre MSC is connected to a plurality of base station controllers BSC. Each of the base station controllers BSC are connected to a plurality of base transceiver stations BTS. The base transceiver stations BTS and the base station controllers BSC to which they are connected form base station sub-systems. Data is communicated via a radio access interface in accordance with the GSM standard between mobile user equipment UE and one of the base transceiver stations BTS with which the mobile user equipment UE is currently affiliated via radio signals. Whilst a mobile user equipment UE is within a coverage area 2, 4, 6 provided by a base transceiver station BTS, radio communications are available through that base transceiver station BTS for transmitting and receiving data via the air interface.

Also forming part of the GSM network shown in Figure 1 is a visitor location register VLR which maintains a current location of each mobile subscriber which has roamed to the mobile network as a visited network. The VLR provides an indication of which of the base stations or group of base stations a mobile user equipment UE may be currently affiliated. The GSM network also includes a home location register HLR which stores information specific to each subscriber to the mobile network which forms the home network for that subscriber. For example the HLR will store an indication of a visited mobile network to which a mobile subscriber has roamed, including an indication of the VLR of the visited network. The home location register HLR also has access to an equipment identity register EIR to provide a facility through which a network operator may track stolen or malfunctioning terminals. The home location register HLR also includes an authentication centre AUC which is used to store information associated with security features provided by the network.

The mobile switching centre MSC is connected to a gateway MSC MSC_GW which provides a facility for connecting the mobile switching centre MSC to other telecommunications networks which may include a public switched telephone network. An MSC support function SUPP_FUNC is also connected to the gateway MSC MSC_GW. More details on the GSM network may be found in a publication entitled "GSM, CDMA1 and 3G systems" by R. Steel ET AL published by Willie ISBN 0471491853.

Although Figure 1 provides an example of a second generation GSM network, it will be appreciated that embodiments of the present invention find application with other types of mobile networks such as for example 2.5G and 3G operating in accordance with the Universal Mobile Telecommunications System.

In Figure 1 a Signalling Transfer Point STP 12 provides a concentration point for signalling communications between the mobile radio network and other networks. Attached to the STP 12 is a signalling probe apparatus 14, which detects signalling data. The signalling data includes signalling messages communicated for example, to and from the MSC, the VLR, and the HLR of the mobile network. As will be explained shortly the signalling data captured by the signalling probe apparatus 14 are used to monitor network connections used by other networks in communicating data to the mobile radio network, and to monitor dropped calls and service quality associated with data communication from the other networks to the mobile radio network.

Within the mobile network the signalling probe apparatus 14 captures Signalling System 7 (SS7) signalling data which are communicated from the MSC, the VLR and the HLR of the mobile network. The capture of signalling data to for example an STP 12 can be effected by known systems such as those for example supplied by Steleus™, Agilent™, Techtronics™, Inet™ and RoamWare™. As illustrated in Figure 1 the signalling data captured by the signalling probe apparatus 14 is received by an analysing data processor 10 for performing the present technique.

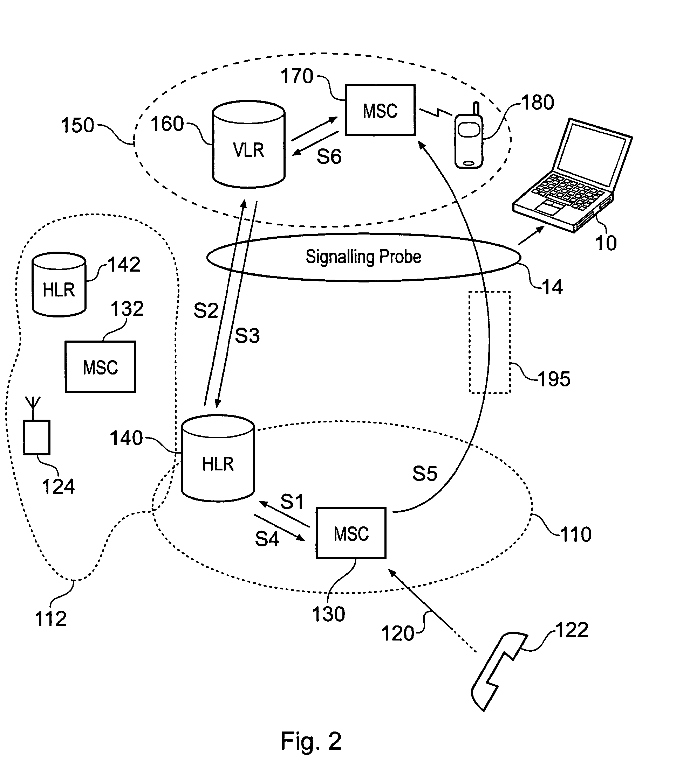

Figure 2 schematically illustrates the monitoring of an inter-network call in accordance with the present technique. Specifically, the Figure 2 embodiment relates to network communications using the Mobile Application Part signalling protocol, although it will be appreciated that the principles described have application in relation to other signalling protocols, such as CAMEL which will be explained later. In Figure 2, a first network 110 is shown, which is connect to a second mobile network under analysis 150. Also shown in Figure 2 is a third network 112 which includes an HLR 142 and the MSC 132. The second mobile network 150 may have roaming mobile terminals currently affiliated to it which may be subscribers of other networks, such as the first network 110. The second mobile network 150 is capable of effecting communications with roaming mobile terminals currently affiliated with the second mobile network using a mobile switching centre (MSC) 170 which can route calls to and from the roaming terminals. The second mobile network 150 also comprises a visitor location register (VLR) 160 which is a database storing subscriber data required for call handling in respect of roaming terminals currently affiliated to the second mobile network 150. An example mobile roaming terminal 180, currently affiliated to the second mobile network 150 is subscribed to a first network 110, the first network 110 being referred to as the "home network" of the roaming terminal 180. When a calling terminal 122 attempts to initiate a call with the roaming terminal 180, initial contact will be made to the first network 110. The first network 110 comprises a home location register (HLR) which is a database storing information regarding subscribers of the first network, including a current roaming location of the roaming terminal 180. The first network also comprises a mobile switching centre (MSC) 130 which can route calls between mobile terminals within the first network 110, and between the first network 110 and external networks such as the second mobile network 150.

The present technique provides a facility for identifying the network from which an in coming call was received and then the interconnection via which the in coming call was received. Therefore for the example shown in Figure 2, the present technique identifies which calls are routed from the first network 110 to the second mobile network 150 rather than the third network 112 and which interconnections the first network 110 used. This is because the third network 112 may also be routing calls from calling terminals 124 to the second mobile network 150.

According to the present technique, signalling data produced when the calling terminal 122 attempts to initiate a call to the roaming terminal 180 is detected. The roaming terminal 180 is a subscriber to an operator of the first network 110 but currently roaming outside the first network 110 and affiliated to the second mobile network 150. The first network 110 is therefore the home network of the roaming terminal 180. A International Mobile Subscriber Identifier (IMSI) provided by the calling terminal indicates the home network of the roaming terminal 180, and the Mobile Number (MSISDN) uniquely identifies the roaming terminal 180. The call is routed from the calling terminal to the first network 110 using an indication of the home network which is provided by a unique associated with the IMSI / MSISDN. At a step S1, the MSC 130 of the first network 110 receives the call and analyses the IMSI with reference to the details stored about the roaming terminal 180 in the HLR 140. The HLR, having determined that the roaming terminal 180 to which the call is addressed is currently present in the second mobile network 150, will, at a step S2, communicate signalling data representing a request for routing data. This signalling data is the Send Routing Information (SRI) message communicated as part of the MAP protocol. The MAP SRI routing request data is communicated to the VLR 160 of the mobile network 150 to inform it about the incoming call to the roaming terminal 180, and to request a mobile station roaming number (MSRN) in respect of the roaming terminal 180. The MSRN is an example of a temporary identification number and is unique at the time of issue, although an identical number may be issued at a later time in respect of another mobile terminal.

The MSRN is required by the first network 110 to initiate a connection with the roaming terminal 180 in the mobile network 150. A signalling probe apparatus 190 provided in association with the mobile network has a signalling probe apparatus and a data analysing processor operable to monitor the communication at the step S2 from the first network 110 to the mobile network 150 and to identify the first network from the monitored communication, based for example on the Global Title address of the VLR 160. The signalling probe apparatus 14 may for instance capture signalling data communicated to and from the STP 12. The signalling data captured by the signalling probe apparatus 14 is then analysed according to the present technique by the analysing data processor 10. The signalling data which is captured and analysed in accordance with the present technique will now be explained.

The mobile network 150 will, at a step S3, and in response to the MAP SRI routing request data sent from the first network 110, generate an MSRN and communicate it to the HLR 140 of the first network 110. The mobile network will also at this stage form an association between the roaming terminal 180 and the MSRN within the VLR 160. The signalling probe apparatus 14 is operable to monitor the communication at the step S3 from the mobile network 150 to the first network 110. Signalling data communicated in accordance with the step S3 is analysed by the analysing data processor 10, which stores the allocated MSRN in association with the identification of the first network 110 determined from signalling data captured from the step S2.

At a step S4, the HLR 140 of the first network 110 will communicate the received MSRN to the MSC 130 to enable it to set up a communication channel with the roaming terminal 180 over which the incoming call from the calling terminal can be provided. At a step S5, the MSC 130 will set up the communication channel with the MSC 170 of the mobile network 150 using the MSRN, the communication channel being provided over a network connection 195. The signalling probe apparatus 14 captures the signalling data communicated in step S5, and the analysing data processor is operable to monitor the communication channel set up using the MSRN and to identify the network connection 195 used to provide the communication channel 190.

At a step S6, when the MSC 170 receives the incoming call from the MSC 130 in association with the MSRN, it will refer the MSRN to the VLR 160 where the association formed in the step S3 will be used to route the incoming call to the roaming terminal 180.

By monitoring communications between the first network 110 and the mobile network 150 at the steps S2 and S3, the signalling probe apparatus 14 in combination with the analysing data processor is able to determine a first network associated with an allocated MSRN number. By monitoring communications between the first network 110 and the mobile network 150 at the step S5, the analysing data processor 10 is able to determine a network connection 195 associated with an MSRN number used to connect a call. The analysing data processor 10 is operable to correlate this information together to provide an association between the first network 110 and the network connection 195 used by the first network 110 to communicate a call to the mobile network 150.

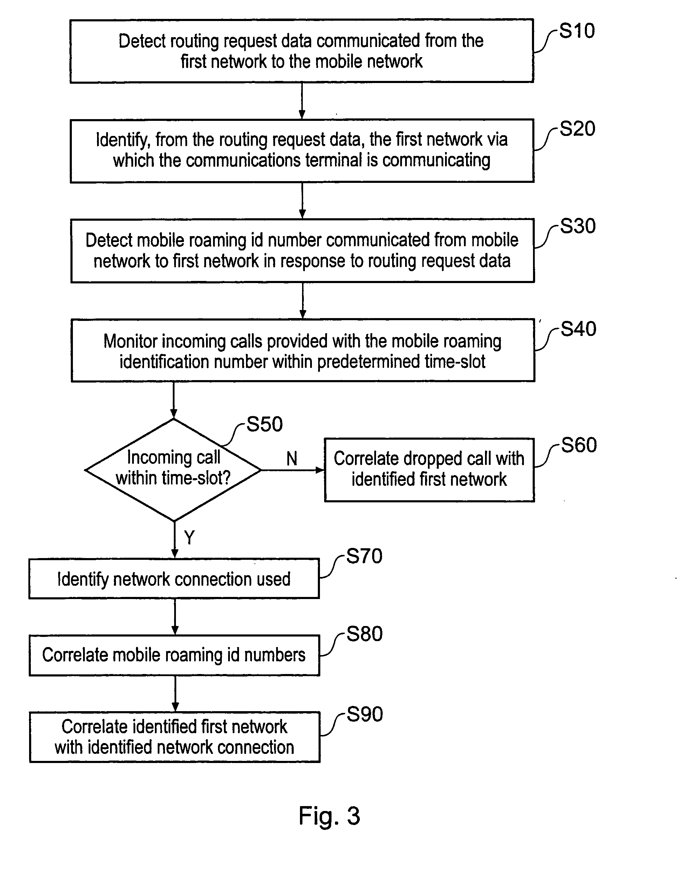

As stated above, the MSRN is temporarily unique, and for this reason is referred to generally as a temporary identification number. Accordingly, in some embodiments an accuracy with which the analysis of network connections is performed can be improved by time limiting the correlation of the MSRNs detected at the step S3 with MSRNs received in relation to calls at the step S5. As a result a likelihood of correlating an MRSN received in response the routing request data with an in coming call which is not associated with the call for which that routing request data was generated can be reduced. Accordingly, time-limiting the correlation between MSRNs detected at the step S3 and those detected at the step S5, can improve an accuracy of the analysis of the network interconnections. The time limit chosen should be of a sufficiently long duration that a call placed at the step S5 will have been made after issuance of the MSRN at the step S3, but of a sufficiently short duration that the MSRN remains unique. This feature of the monitoring method will now be considered in more detail with reference to Figure 3, which schematically illustrates a method of analysing inter-network calls used by the signalling probe apparatus 14 and the data analysing processor 10 illustrated in Figure 2.

In Figure 3, at a first step S10, the signalling probe apparatus 14 detects routing request data (MAP SRI) communicated from the first network to the mobile network in the form of MAP signalling. Upon detection of the routing request data by the signalling probe apparatus 14, the analysing data processor 10 identifies, at a step S20, the first network via which the incoming call is being communicated thanks to the Global Title of the VLR for example. A short period after detection of the routing request data, the signalling probe apparatus detects, at a step S30, a temporary identification number, in this case an MSRN communicated from the mobile network to the first network in response to the routing request data. The analysing data processing apparatus then, at steps S40 and S50, monitors for incoming calls provided in association with the temporary identification number. In particular, the Integrated Services User Part (ISUP) trace of the call is monitored. However, only incoming calls which are detected within a predetermined time period after the issue of the temporary identification number (MRSN) can be correlated with the issued temporary identification number. Specifically, if no incoming call is received in association with the temporary identification number (MRSN), it is determined at the step S50 that the lack of an incoming call should, at a step S60 be correlated with the identified first network as a "dropped call". Later analysis can then determine the number of dropped calls occurring in respect of a given first network. However, if at the step S50 it is determined that an incoming call is received in association with the temporary identification number within the predetermined time period, then the analysing data processor 10, at a step S70, identifies the network connection used to route the call from the first network to the mobile network. The network identification is obtained by analysing the Point Code (PC) and the Circuit Identification Code used for establishing the communication path when the call reaches the network interconnection. The analysing data processor 10 will also verify that, during the predetermined time period, no other incoming call was received with the same roaming identification number. In this case, the system will preferably reject the current call as a valid incoming flow identifier.

The analysing data processor 10 will also in this case correlate, at a step S80, the temporary identification number detected at the step S20 and the temporary identification number detected in association with the incoming call at the step S40. Then, at a step S90, the analysing data processor will correlate the identified first network with the identified network connection. The correlated data can then be used for network analysis. It will of course be appreciated that the greater the number of sampled incoming calls, the greater the quality of the information provided by correlating the data. Calls may be suitably sampled by monitoring only the range of the temporary identification number (MRSN) allocated to the mobile network.

As described above, without the benefit of the invention it is difficult for an operator of a mobile network to estimate how incoming traffic is routed from its origin. Such a lack of visibility gives rise to several issues. For instance, it is not possible to effectively assess the quality experienced by outbound roamers and customers of distant operators while trying to access the mobile network. Examples of quality related issues include:
- Calls may be routed incorrectly and lost.
- Call information may be corrupted - e.g. the Calling Line Identity (CLI) may be lost or modified.
- Calls may be routed through illicit interconnections (international traffic routed on national trunks) or GSM-gateways which may both affect the service quality experienced by the customer. An example of such an interconnection would be a SEWBOX which routes calls using the temporary identification numbers detected by embodiments of the present invention via the radio interface. The Simbox would then result in a quality decrease by corrupting call information, would extend the call setup duration and prevent use of the DTMF functions (use of keypad for conversing with an interactive system e.g. a phone-banking system).

Additionally, the operator of the mobile network may be interested in validating commercial agreements on international volume exchange (i.e. which network connections are used to route calls from a first network to the mobile network). For example, the operator of the mobile network may sign a traffic exchange agreement with other operators which stipulates volume and routes to be used. The present technique provides a facility for confirming that such agreements are being complied with.

The correlated relationship between first networks and network connections can be used to determine whether quota agreements are being met by the first network, or whether the network connections used by a particular first network are of a suitable quality. Additionally, the dropped calls referred to above can be attributed to a particular first network, enabling further investigation of the nature of the dropped calls. Similarly, the correlation can be used to identify, for a particular first network, network connections providing unsatisfactory quality in respect of some or all incoming calls from the first network. For instance, network connections in which Caller Line Identification (CLI) signalling is either not being provided, or has been corrupted.

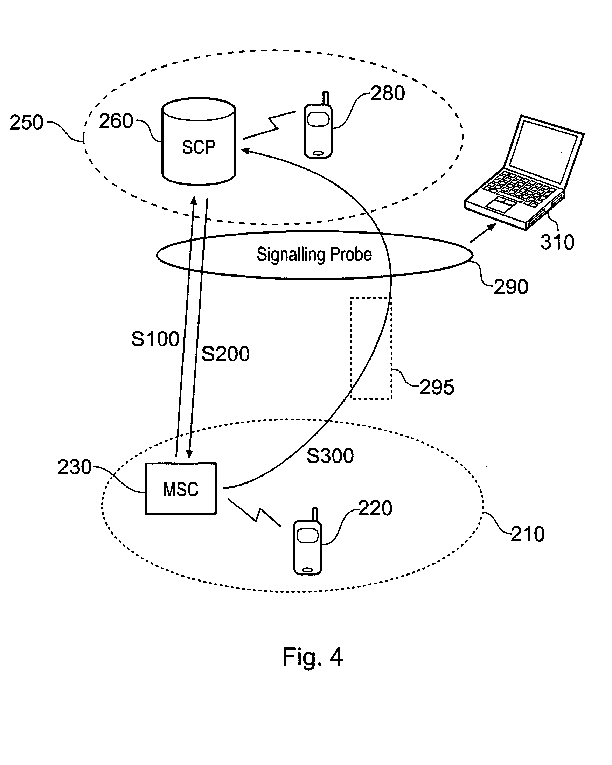

Figure 4 schematic illustrates an alternative embodiment of the invention using a Customised Application of Mobile Enhanced Logic (CAMEL) Application Part signalling protocol. In Figure 4, a mobile calling terminal is currently located in, and affiliated to, a first network 210. The first network 210 includes an MSC 230 which controls communications between mobiles, such as the mobile calling terminal 220, within the first network 210, and which controls communications between the first network 210 and the mobile network 250. Specifically, the MSC 230 is operable to communicate with a service control point (SCP) 260 located in the mobile network 250. The SCP 260 controls communications using the CAMEL protocol. The mobile calling terminal 220 is a subscriber of a second mobile network 250, so that the calling mobile terminal is an out bound mobile subscriber. The calling mobile terminal 220 has roamed to the first mobile network 210 and initiates a call to a called terminal 280 affiliated with the second mobile network, which is the home network of the calling mobile terminal 220.

When the mobile calling terminal 220 attempts to initiate a call with the mobile terminal 280, it contacts the MSC 230 which triggers the communication of service signalling data associated with a CAMEL signalling communication such as a CAMEL Application Part (CAP) Initial Detection Point (IDP). The CAP IDP identifies the mobile user equipment from the International Mobile Subscriber Identifier (IMSI), the called party and the VLR of the visited mobile network. This service signalling data is communicated at a step S100 to the SCP 260 of the mobile network 250 and serves as routing request data to connect the incoming call.

The CAP IDP service signalling data may include:
- The International Mobile Subscriber Identifier (IMSI); and
- A detailed location information describing the origin of the call

The CAP-IDP signalling at the step S100 is detected by a signalling probe apparatus 290 arranged with respect to the mobile network 250 to intercept communications to and from the first network 210. From the CAP IDP signalling, an analysing data processor 310 is able to identify the first network.

In response to the CAP IDP signalling, the SCP 260 provides, at a step S200, a Temporarily unique Service Access Number (TSAN) which can be used to connect the call between the mobile calling terminal 220 and the mobile terminal 280. The signalling probe apparatus 290 detects the communication of the TSAN from the mobile network 250 to the first network 210.

When the MSC 230 of the first network 210 receives the TSAN from the SCP 260 of the mobile network 250 it will use the TSAN to set up, at a step S300, a communication channel between the mobile calling terminal 220 in the first network 210 and subsequently the mobile terminal 280 in the mobile network 250. Specifically, the TSAN enables the call to be routed via the SCP 260 in the mobile network 250. TSAN may be used for example for enabling the credit control in the case of a prepaid mobile call. The call will be routed between the first network 210 and the mobile network 250 using a network connection 295. When the call at the step S300 is received at the mobile network 250, the signalling probe apparatus 290 will detect the incoming call in association with the TSAN used to set up the call. From this, the analysing data processor 310 is able to identify the network connection 295 used to communicate the call. The analysing data processor 310 is then able to correlate the TSAN detected at the step S100 with the incoming call using the TSAN at the step S300, and to subsequently correlate the first network 210 with the network connection 295 with respect to the correlated TSANs. The analysis of the correlation data can be performed in respect of the Figure 4 embodiment in the same way as with the Figure 2 and Figure 3 embodiment.

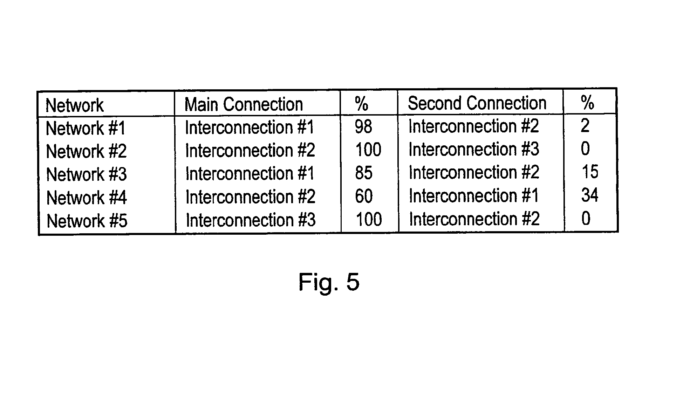

Figure 5 schematically illustrates an example set of results, which could be generated by the above-described monitoring systems and methods. The results presented in Figure 5 are illustrative only since, as will be appreciated, authentic data of this nature in respect of a mobile network represents commercially sensitive information and should therefore not be disclosed. However, the results are provided to illustrate an application of embodiments of the present technique for analysing network interconnections used to route calls between two networks. Referring to Figure 5, the first column of the table lists five first networks as described above. The second column sets out for each of the five first networks the main connection used to route calls from that first network to the mobile network under analysis, and the third column represents the percentage of calls routed to the mobile network using the main interconnection. In the case of Network #1 it can be seen that 98% of calls were routed via Interconnection #1. The fourth column sets out for each of the five first networks the second connection optionally used to route calls from that first network to the mobile network, and the fifth column represents the percentage of calls routed to the mobile network using the second connection. In the case of network #1 it can be seen that 2% of calls were routed via Interconnection #2. Note that more than two connections may be used to route calls from the first network to the mobile network, the contents of the table being merely illustrative in nature. For instance, referring to Network #4, the combined percentage for the main and second connection would be 60% + 34% = 94%. This may mean that a third connection was used to route calls from the first network #4 to the mobile network, or it may mean that 6% of calls were dropped calls as discussed above.

Various modifications may be made to the embodiments herein before described without departing from the scope of the present invention. It will be appreciated that embodiments of the present technique find application with any type of mobile radio network and should not be considered to be limited to the MAP or CAMEL standards.

## Claims

1. A method of analysing network connections used to communicate incoming calls from a first network to a second mobile network, the method comprising
detecting routing request data communicated from the first network to the second mobile network, the routing request data providing a request for a temporary identification number required for establishing an incoming call between a calling terminal communicating via the first network and a called terminal affiliated with the second mobile network, the temporary identification number being allocated to the called terminal to temporarily identify the called terminal within the second mobile network;
identifying, from the routing request data, the first network via which the calling terminal is communicating;
detecting the temporary identification number communicated from the second mobile network to the first network in response to the routing request data;
detecting an incoming call communicated from the calling terminal via the first network to the second mobile network over a network connection between the first network and the second mobile network, to the called terminal,
identifying a temporary identification number received with the incoming call,
correlating the temporary identification number received with the incoming call with the temporary identification number provided in response to the routing request data to identify that the in coming call was established in response to the routing request data, associating the first network with the in coming call, and
identifying the network connection used to communicate the incoming call from the first network to the second mobile network.

2. A method as claimed in Claim 1, wherein the correlating the temporary identification number received with the in coming call with the temporary identification number provided in response to the routing request data comprises
correlating the incoming call by identifying the temporary identification number received with the in coming call within a predetermined time from the detecting the mobile roaming subscriber identity number received in response to the request for routing data.

3. A method as claimed in Claim 2, comprising
if the temporary identification number is not detected within the predetermined time, identifying the call as being associated with a routing problem between the associated first network and the second mobile network.

4. A method as claimed in Claim 1, 2 or 3, including
determining whether the relative distribution of calls communicated between the first network and the second mobile network using the identified network connections satisfies predetermined criteria.

5. A method as claimed in Claim 4, wherein the predetermined criteria include comparing a relative proportion of incoming calls from the first network to the second network received by network connections associated with a particular bearer company with a relative proportion agreed with an operator of the first network or the bearer company.

6. A method as claimed in any preceding claim, wherein the identifying the network connection used to communicate the incoming call from the first network to the second mobile network, includes
identifying network connections providing unsatisfactory quality in respect of some or all incoming calls from the first network.

7. A method as claimed in any preceding Claim, wherein the called terminal is a mobile terminal of a subscriber to an operator of the first network, the mobile terminal being an in-bound roaming mobile subscriber currently affiliated with the second mobile network.

8. A method as claimed in Claim 7, wherein the routing request data and the temporary identification number are generated as part of a Mobile Application Part signalling protocol, the temporary identification number being a Mobile Station Roaming Number and the routing request data being Send Routing Information signalling data.

9. A method as claimed in any of Claims 1 to 6, wherein the calling terminal is a mobile terminal of a subscriber to an operator of the second mobile network and roaming within the first network.

10. A method as claimed in Claim 9, wherein the routing request data and the temporary identification number are generated as part of a Customised Application of Mobile Enhanced Logic Application Part signalling protocol, the temporary identification number being a Temporary Service Access Number.

11. A system for analysing network connections used to communicate incoming calls from a first network to a second mobile network, the system comprising:
a signalling probe apparatus operable
to detect routing request data communicated from the first network to the second mobile network, the routing request data providing a request for a temporary identification number required for establishing an incoming call between a calling terminal communicating via the first network and a called terminal affiliated with the second mobile network, the temporary identification number being allocated to the called terminal to temporarily identify the called terminal within the second mobile network; and
to detect an incoming call communicated from the calling terminal via the first network to the second mobile network over a network connection between the first network and the second mobile network, to the called terminal, and
a data analysing processor operable
to identify, from the routing request data, the first network via which the calling terminal is communicating;
to detect the temporary identification number communicated from the second mobile network to the first network in response to the routing request data;
to identify a temporary identification number received with the incoming call,
to correlate the temporary identification number received with the incoming call with the temporary identification number provided in response to the routing request data to identify that the in coming call was established in response to the routing request data associating the first network with the in coming call; and
to identify the network connection used to communicate the incoming call from the first network to the second mobile network.

12. A system as claimed in claim 11, wherein the data analysing processor is operable
to correlate the incoming call by identifying the temporary identification number within a predetermined time from detecting the mobile roaming subscriber identity number received in response to the routing request data.

13. A system as claimed in Claim 12, wherein the data analysing processor is operable
if the temporary identification number is not detected within the predetermined time, to identify the call as being associated with a routing problem between the associated first network and the second mobile network.

14. A system as claimed in Claim 11, 12 or 13, wherein the data analysing processor is operable to identify from the comparison of the identified network and the correlated temporary identification numbers whether the relative distribution of calls communicated between the first network and the second mobile network using the identified network connections satisfies predetermined criteria.

15. A system as claimed in Claim 14, wherein the predetermined criteria include comparing a relative proportion of incoming calls from the first network to the second mobile network received by network connections associated with a particular bearer company with a relative proportion agreed with an operator of the first network or the bearer company.

16. A system as claimed in any of Claims 11 to 15, wherein the data analysing processor is operable to identify from the comparison of the identified network and the correlated temporary identification numbers network connections providing unsatisfactory quality in respect of some or all incoming calls from the first network.

17. A system as claimed in any of Claims 11 to 16, wherein the called terminal is a mobile terminal of a subscriber to an operator of the first network and roaming within the second mobile network.

18. A system as claimed in Claim 17, wherein the routing request data and the temporary identification number are generated as part of a Mobile Application Part signalling protocol, the temporary identification number being a Mobile Station Roaming Number and the routing request data being Send Routing Information signalling data.

19. A system as claimed in any of Claims 11 to 16, wherein the calling terminal is a mobile terminal of a subscriber to an operator of the second mobile network and roaming within the first network.

20. A system as claimed in Claim 19, wherein the routing request data and the temporary identification number are generated as part of a Customised Application of Mobile Enhanced Logic Application Part signalling protocol, the temporary identification number being a Temporary Service Access Number.

21. A data analysing processor for analysing network connections used to communicate incoming calls from a first network to a second mobile network, using signalling data comprising routing request data communicated from the first network to the second mobile network, the routing request data providing a request for a temporary identification number required for establishing an incoming call between a calling terminal communicating via the first network and a called terminal affiliated with the second mobile network, the temporary identification number being allocated to the called terminal to temporarily identify the called terminal within the second mobile network; and an incoming call communicated from the calling terminal via the first network to the second mobile network over a network connection between the first network and the second mobile network, to the called terminal, the data analysing processor being operable to identify, from the routing request data, the first network via which the calling terminal is communicating;
to detect the temporary identification number communicated from the second mobile network to the first network in response to the routing request data;
to identify an temporary identification number received with the incoming call,
to correlate the temporary identification number received with the incoming call with the temporary identification number provided in response to the routing request data to identify that the in coming call was established in response to the routing request data associating the first network with the in coming call; and
to identify the network connection used to communicate the incoming call from the first network to the second mobile network.

22. A computer program providing computer executable instructions, which when loaded on to a data processor causes the data processor to perform the method according to any of Claims 1 to 10.

23. A medium bearing information representing the computer program as claimed in Claim 22.

24. A data carrier being the medium as claimed in Claim 22.
